Europäisches Patentamt

European Patent Office

Office européen des brevets

(11) Numéro de publication: **0 265 312**
**A1**

(12) **DEMANDE DE BREVET EUROPEEN**

(21) Numéro de dépôt: **87402154.6**

(22) Date de dépôt: **28.09.87**

(51) Int. Cl.⁴: **G 11 C 17/00**
G 06 F 1/00, G 06 K 19/06,
G 07 F 7/10

(30) Priorité: **30.09.86 FR 8613576**

(43) Date de publication de la demande:
**27.04.88 Bulletin 88/17**

(84) Etats contractants désignés: **DE ES FR GB IT**

(71) Demandeur: **THOMSON COMPOSANTS MILITAIRES ET SPATIAUX**
**173, Bd Haussmann**
**F-75008 Paris (FR)**

(72) Inventeur: **Marquot, Alexis**
**SCPI 19, avenue de Messine**
**F-75008 Paris (FR)**

(74) Mandataire: **Ruellan-Lemonnier, Brigitte et al**
**THOMSON-CSF SCPI 19, avenue de Messine**
**F-75008 Paris (FR)**

(54) **Circuit intégré du type circuit logique comportant une mémoire non volatile programmable électriquement.**

(57) La présente invention concerne un circuit intégré du type circuit logique comportant une mémoire non volatile programmable électriquement constituée d'une matrice de cellules-mémoire du type à transistor à grille flottante, des circuits d'écriture et de lecture et des moyens gérant l'interconnexion de ces circuits avec la mémoire, le circuit recevant une tension d'alimentation générale $V_{CC}$ et une tension de programmation $V_{PP}$ différente. Il comporte de plus des moyens (20) de détection de la tension d'alimentation principale $V_{CC}$ envoyant un signal interdisant l'écriture dans la mémoire lorsqu'il détecte que la tension d'alimentation $V_{CC}$ est à zéro ou en haute impédance tandis que la tension de programmation $V_{PP}$ est présente.

Application notamment aux cartes à mémoire.

FIG_2

EP 0 265 312 A1

## Description

CIRCUIT INTEGRE DU TYPE CIRCUIT LOGIQUE COMPORTANT UNE MEMOIRE NON VOLATILE
PROGRAMMABLE ELECTRIQUEMENT

La présente invention concerne un circuit intégré de type circuit logique comportant une mémoire non volatile programmable électriquement. Elle concerne plus particulièrement un circuit intégré dans laquelle la mémoire non volatile programmable électriquement est constituée par une mémoire de type EPROM ou EEPROM. De tels circuits sont utilisés, par exemple, dans les cartes à mémoire appelées aussi cartes CCC. Dans ce cas. les mémoires non volatiles sont le plus souvent destinées à recevoir des informations confidentielles infalsifiables.

Or, dans les mémoires de type EPROM ou EEPROM actuellement disponibles sur le marché, chaque élément de stockage d'information ou cellule-mémoire est constitué par un transistor MOS à grille flottante. Ce type de transistor peut avoir deux états. Ainsi, dans le cas d'un transistor à canal N, dans un premier état, aucune charge n'est piégée sur la grille flottante. Un canal de conduction peut exister entre source et drain. Le transistor conduit alors et se comporte comme un interrupteur fermé. Dans un deuxième état les électrons ont été piégés sur la grille flottante. Ils empêchent la création d'un canal de conduction dans le substrat entre source et drain. Dans ce cas le transistor est bloqué et se comporte comme un interrupteur ouvert.

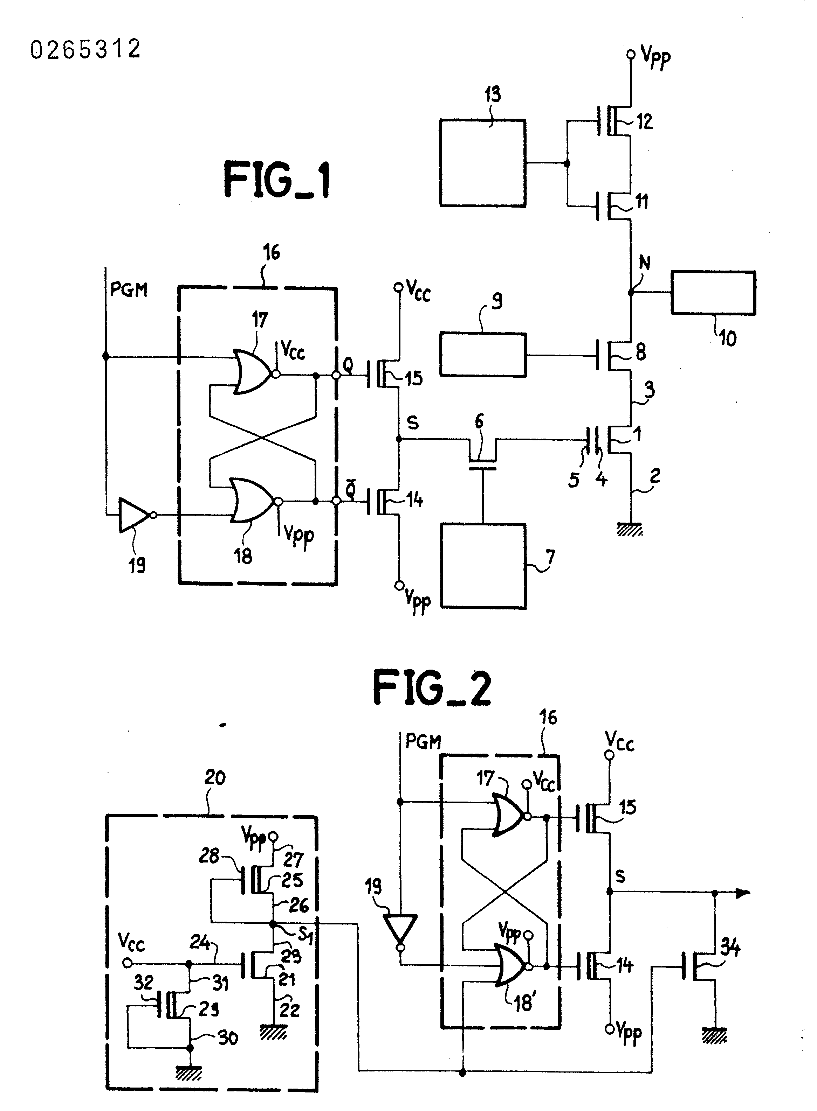

Pour programmer ou lire un transistor MOS à grille flottante différentes tensions doivent pouvoir être appliquées sur les différentes électrodes du transistor. Ces tensions sont appliquées à l'aide de circuits spécifiques. Ainsi, comme représenté sur la figure 1 qui concerne une mémoire EPROM dont la cellule mémoire 1 est constituée par un transistor à grille flottante de type SAMOS (pour Stacked Gate Avalanche Injection MOS), chaque transistor à grille flottante 1 comporte deux électrodes principales respectivement 2 et 3 et une grille de commande 5 empilées sur la grille flottante 4. Dans le cas d'une mémoire, les transistors à grille flottante 1 constituant les cellules-mémoire sont connectés sous forme matricielle. Ainsi, une première électrode principale 2 ou source, dans la technologie utilisée, est reliée à la masse tandis que l'autre électrode 3 ou drain est reliée par l'intermédiaire d'une ligne de bits non représentée et d'un transistor MOS formant interrupteur 8 à un décodeur d'adresses de colonnes 9. La grille de commande 5 est reliée par l'intermédiaire d'une autre connexion dite ligne de mots non représentée à un décodeur d'adresses de lignes 7.

De manière plus spécifique, le décodeur d'adresses de colonnes 9 est relié à la grille du transistor 8 dont la source est reliée à l'électrode 3 du transistor MOS 1 à grille flottante tandis que son autre électrode ou drain est reliée par l'intermédiaire d'une ligne de charge constituée des transistors MOS 11 et 12 à la tension de programmation Vpp. La ligne de charge est constituée d'un transistor MOS 12 déplété dont le drain est relié à Vpp et la source

connectée au drain d'un transistor MOS 11 enrichi, les deux grilles des transistors 11 et 12 étant connectées ensemble et reliées à un circuit de commande d'écriture 13. D'autre part, le noeud N entre la source du transistor MOS 11 et le drain du transistor MOS 8 est connecté à un amplificateur de lecture représenté par le bloc 10.

De même, le décodeur d'adresses de lignes 7 est relié à la grille du transistor MOS interrupteur 6 dont l'une des électrodes principales est reliée à la grille de commande 5 du transistor MOS 1 à grille flottante tandis que son autre électrode principale est reliée à la sortie d'un circuit de commutation de tension.

Comme représenté sur la figure 1, le circuit de commutation de tension est constitué essentiellement des deux transistors MOS déplétés 14 et 15 montés entre la tension d'alimentation Vcc et la tension de programmation Vpp. De manière plus spécifique, le drain du transistor déplété 14 est connecté à Vpp. Sa source est connectée à la source du transistor déplété 15 dont le drain est connecté à Vcc. La sortie du circuit de commutation est réalisée au point milieu S entre les deux transistors MOS déplétés 14 et 15. D'autre part, les grilles des deux transistors MOS déplétés 14 et 15 sont connectés respectivement sur les sorties $\overline{Q}$ et Q d'une bascule RS 16. Cette bascule 16 est réalisée à l'aide de deux portes NI 17 et 18 entrecouplées, c'est-à-dire qu'une des entrées de la porte NI 17 est connectée à la sortie de la porte NI 18 et une des entrées de la porte NI 18 est connectée à la sortie de la porte NI 17. D'autre part, la porte NI 17 est alimentée à la tension d'alimentation Vcc tandis que la porte NI 18 est alimentée à la tension de programmation Vpp. Les autres entrées des portes NI 17 et 18 sont connectées respectivement au signal de commande de programmation PGM et au signal de commande de programmation $\overline{PGM}$ obtenu en sortie de l'inverseur 19.

Lors de la programmation d'une cellule-mémoire du type de celle représentée à la figure 1, le signal PGM se trouve au niveau logique 1. En conséquence, les sorties de la bascule RS 16 sont respectivement à "0" et à "1". De ce fait, le signal sur la sortie S se trouve au niveau logique Vpp. Ainsi, lorsque la cellule-mémoire 1 est sélectionnée par l'intermédiaire des décodeurs 7 et 9, sa grille de commande 5 reçoit une tension de programmation égale à Vpp. D'autre part, suivant que la donnée en entrée du circuit d'écriture 13 est un "1" ou un "0", les transistors MOS 11 et 12 constituant la ligne de charge sont respectivement passants ou bloqués et le drain du transistor MOS 1 à grille flottante 1 reçoit une tension sensiblement égale à Vpp ou flottante. Avec les circuits ci-dessus, on a expérimenté que si l'on envoie des impulsions sur l'alimentation de la tension d'alimentation Vpp, alors que le circuit est hors tension Vcc, il est possible de programmer la mémoire non volatile dans n'importe laquelle de ses zones de manière aléatoire, car les circuits de protection généralement associés à ces mémoires sont alors hors d'usage. Ceci est particulièrement gênant dans le cas où certaines zones de la mémoire non volatile sont destinées à recevoir des informations confidentielles dont l'écriture est strictement contrôlée et quand ces mémoires sont accessibles par des connexions externes, ce qui est le cas pour les cartes à mémoire.

En effet, dans les cartes à mémoire, le circuit intégré du type circuit logique comportant la mémoire volatile programmable élec triquement est enchâssé dans un support appelé carte et des bornes de connexion électrique sont accessibles en surface pour que des opérations puissent être exécutées avec la carte dans un terminal. En conséquence, notamment les tensions d'alimentation Vcc et de programmation Vpp sont accessibles par des connexions qui peuvent être hors d'usage entraînant une mauvaise alimentation de la carte et des possibilités de programmation aléatoire.

La présente invention a donc pour but de remédier aux inconvénients mentionnés ci-dessus et elle a pour objet un circuit intégré du type circuit logique comportant une mémoire non volatile programmable électriquement constituée d'une matrice de cellules-mémoire du type à transistor à grille flottante, des circuits d'écriture et de lecture et des moyens gérant l'interconnexion de ces circuits avec la mémoire, le circuit recevant une tension d'alimentation générale Vcc et une tension de programmation Vpp différentes, caractérisé en ce qu'il comporte de plus des moyens de détection de la tension d'alimentation principale Vcc envoyant un signal interdisant l'écriture dans la mémoire lorsqu'il détecte que la tension d'alimentation Vcc est à "0" ou en haute impédance tandis que la tension de programmation Vpp est présente.

Selon un mode de réalisation préférentiel, les moyens de détection sont constitués par un inverseur comportant un transistor signal de type MOS dont la grille est connectée à la tension d'alimentation Vcc et une charge connectée à la tension de programmation Vpp, l'inverseur délivrant un signal logique "0" lorsque la tension d'alimentation Vcc est établie et un signal logique "1" dans les autres cas.

De préférence, la charge est constituée par un transistor MOS déplété dont la grille est connectée à une des électrodes principales et le transistor signal est constitué par un transistor MOS enrichi.

Selon une autre caractéristique de la présente invention, les moyens de détection comportent de plus une charge montée entre la grille du transistor signal et la masse de manière à mettre la tension grille-source du transistor signal à la masse lorsque la tension d'alimentation Vcc est en haute impédance.

Dans ce cas, la charge est constituée par un transistor MOS déplété dont la grille est connectée à la source.

Selon une autre caractéristique de la présente invention pour que le circuit de détection fonctionne pour les tensions d'alimentation Vcc acceptables par la mémoire, la tension de seuil $V_T$ du transistor signal est choisie telle que $V_T$ soit sensiblement égale à Vcc min.

Selon une caractéristique supplémentaire de la présente invention, la sortie des moyens de détection est connectée par l'intermédiaire d'une porte à une partie du circuit de programmation de manière à bloquer la tension Vpp lorsque la tension d'alimentation Vcc est à "0" ou en haute impédance.

D'autres caractéristiques et avantages de la présente invention apparaîtront à la lecture de la description d'un mode de réalisation faite ci-après avec référence au dessin ci-annexé dans lequel:

- la figure 1 déjà décrite est une représentation schématique d'un circuit intégré comportant une mémoire non volatile programmable électriquement auquel peut s'appliquer la présente invention,

- la figure 2 est une représentation schématique d'un circuit de détection conforme à la présente invention et des moyens de connexion au circuit intégré de la figure 1.

Pour simplifier la description, dans les figures les mêmes éléments portent les mêmes références. D'autre part, dans la description on s'est référé à une mémoire EPROM dont la cellule-mémoire est constituée par un transistor MOS à grille flottante de type SAMOS réalisé en technologie N MOS, toutefois il est évident pour l'homme de l'art que la présente invention peut s'appliquer à d'autres types de mémoires non volatiles programmables électriquement nécessitant une tension de programmation différente de la tension d'alimentation générale et réalisées dans d'autres technologies.

Comme représenté sur la figure 2, les moyens de détection 20 conformes à la présente invention sont constitués essentiellement d'un transistor MOS signal 21 constitué par un transistor MOS enrichi dont une des électrodes à savoir la source 22 dans la technologie utilisée est connectée à la masse et dont l'autre électrode 23 à savoir le drain est connectée à une charge décrite ultérieurement. La grille 24 de ce transistor MOS est connectée à la tension d'alimentation générale Vcc. Selon une caractéristique particulière de la présente invention, le circuit intégré comportant ces moyens de détection doit pouvoir fonctionner pour des tensions d'alimentation Vcc supérieures à une certaine tension d'alimentation Vcc min. En conséquence, le transistor MOS enrichi 21 a été réalisé de manière à présenter une tension de seuil $V_T$ qui est sensiblement égale à la tension d'alimentation Vcc min. L'utilisation d'un transistor MOS enrichi à tension de seuil spécifique permet de détecter de manière sûre le passage de la tension Vcc au-dessus de la tension de seuil.

D'autre part, conformément au mode de réalisation préférentiel de la présente invention représenté sur la figure 2, la charge est constituée par un transistor MOS déplété 25. La source 26 de ce transistor MOS est reliée au drain 23 du transistor MOS signal 21 et son drain 27 est relié à la tension de programmation Vpp. De manière connue, sa grille 28 est connectée à sa source 26 de telle sorte que la tension $V_{GS}$ égale "0". La sortie S1 du circuit de détection est prélevée en un point milieu entre les électrodes 26 et 23.

Selon une caractéristique supplémentaire de la présente invention une charge est connectée entre la grille 24 du transistor MOS signal 21 et la masse. Cette charge est constituée par un transistor MOS déplété 29 dont la source 30 est connectée à la masse et le drain 31 à la grille 24 du transistor 21. La grille 32 du transistor 29 est connectée à sa source 30. Cette charge tire la tension $V_{CC}$ de la grille 24 vers zéro, lorsque $V_{CC}$ est en haute impédance.

On expliquera maintenant le fonctionnement du circuit de détection 20 représenté à la figure 2. Tant que la tension $V_{CC}$ est inférieure à $V_{CC}$ min, le transistor signal 21 est bloqué et le transistor 25 fonctionne en régime triode. La sortie S1 délivre donc un signal logique "1" correspondant à $V_{PP}$. Pour une tension $V_{CC}$ supérieure à $V_{CC}$ min, le transistor signal 21 passe en régime triode et le transistor 25 en régime saturé et l'on obtient un signal sur la sortie S1 qui correspond à un signal logique "0".

Par ailleurs, le signal logique de sortie S1 du circuit de détection 20 conforme à la présente invention est envoyé sur une partie du circuit intégré, plus particulièrement sur une partie du circuit de programmation de manière à bloquer la tension de pro grammation $V_{PP}$ lorsque la tension d'alimentation $V_{CC}$ est à "0" ou en haute impédance. A titre d'exemple, comme représenté sur la figure 2 ce signal logique peut être envoyé sur le circuit de commutation réalisant la commutation de la tension de programmation $V_{PP}$ à la tension d'alimentation $V_{CC}$, ce circuit alimentant les grilles de commande des transistors MOS à grille flottante 1 constituant les cellules-mémoire de la mémoire EPROM. Ce circuit de commutation est identique au circuit de commutation décrit avec référence à la figure 1. Il ne sera pas redécrit ici. Toutefois, comme représenté sur la figure 2, le signal de sortie S1 est envoyé sur une entrée de la porte NI 18' qui correspond à la porte NI 18 à l'exception du fait qu'il s'agit d'une porte à trois entrées et non d'une porte à deux entrées. Lorsque le signal S1 est au niveau logique "1", la porte NI 18' est bloquée et il n'est plus possible d'obtenir $V_{PP}$ au niveau de la sortie S. De plus, comme représenté sur la figure 2, un transistor MOS enrichi 34 est monté entre la sortie S et la masse. La grille de ce transistor MOS 34 est reliée à la sortie S1. Ainsi, lorsque la sortie S1 est au niveau logique 1 le transistor MOS 34 amène la sortie S au niveau logique "0".

L'avantage du circuit décrit ci-dessus est d'interdire toute programmation aléatoire d'une mémoire non volatile programmable électriquement destinée principalement à recevoir des données confidentielles et cela, dans le cas de fonctionnement en dehors des conditions normales de tension d'alimentation. Ce circuit est d'autre part de conception très simple, nécessite peu de place et son fonctionnement est très fiable.

Il est évident pour l'homme de l'art que la présente invention peut s'appliquer à tout circuit intégré comportant des mémoires dont la programmation d'une cellule-mémoire est réalisée de la même manière que dans les EPROM ou EEPROM du type à transistor à grille flottante et dont les bornes des tensions d'alimentation sont facilement accessibles de l'extérieur.

## Revendications

1. Circuit intégré du type circuit logique comportant une mémoire non volatile programmable électriquement constituée d'une matrice de cellules-mémoire du type à transistor à grille flottante, des circuits (10 à 16) d'écriture et de lecture et des moyens (6 à 9) gérant l'interconnexion de ces circuits avec la mémoire, le circuit recevant une tension d'alimentation générale $V_{CC}$ et une tension de programmation $V_{PP}$ différente, caractérisé en ce qu'il comporte de plus des moyens (20) de détection de la tension d'alimentation principale $V_{CC}$ envoyant un signal interdisant l'écriture dans la mémoire lorsqu'il détecte que la tension d'alimentation $V_{CC}$ est à zéro ou en haute impédance tandis que la tension de programmation $V_{PP}$ est présente.

2. Circuit intégré selon la revendication 1, caractérisé en ce que les moyens (20) de détection sont constitués par un inverseur comportant un transistor signal (21) de type MOS dont la grille est connectée à la tension d'alimentation $V_{CC}$ et une charge (25) connectée à la tension de programmation $V_{PP}$, l'inverseur délivrant un signal logique "0" lorsque la tension d'alimentation $V_{CC}$ est établie et un signal logique "1" dans les autres cas.

3. Circuit intégré selon la revendication 2, caractérisé en ce que la charge est constituée par un transistor MOS (25) déplété dont la grille (28) est connectée à une (26) des électrodes principales.

4. Circuit intégré selon l'une quelconque des revendications 2 et 3, caractérisé en ce qu'il comporte de plus une charge (29) montée entre la grille (24) du transistor signal et la masse de manière à mettre la tension grille-source du transistor signal à la masse lorsque la tension d'alimentation $V_{CC}$ est en haute impédance.

5. Circuit intégré selon la revendication 4, caractérisé en ce que la charge est constituée par un transistor MOS (29) déplété dont la grille (32) est connectée à une (30) des électrodes principales.

6. Circuit intégré selon l'une quelconque des revendications 2 à 5, caractérisé en ce que la tension de seuil $V_T$ du transistor signal (21) est choisie telle que $V_T \simeq V_{CC}$ min.

7. Circuit intégré selon l'une quelconque des revendications 1 à 6, caractérisé en ce que la sortie (S1) des moyens de détection (20) est connectée par l'intermédiaire d'une porte à une partie du circuit de programmation de manière à bloquer la tension $V_{PP}$ lorsque la tension d'alimentation $V_{CC}$ est à zéro ou en haute impédance.

0265312

# FIG_1

# FIG_2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 053 273 (ITT)<br>* Page 4, ligne 32 - page 9, ligne 28; figure 1 *<br>--- | 1,3,7 | G 11 C 17/00<br>G 06 F 1/00<br>G 06 K 19/06<br>G 07 F 7/10 |
| A | US-A-4 439 804 (RIDDLE et al.)<br>* Colonne 2, ligne 59 - colonne 5, ligne 5; figure *<br>--- | 1,2,7 | |
| A | 1980 IEEE INTERNATIONAL SOLID-STATE CIRCUITS CONFERENCE, 13 février 1980, pages 58,59, IEEE, New York, US; A.C. GRAHAM et al.: "Battery backup circuits for memories"<br>* Page 58, lignes 30-44 *<br>----- | 1 | |

|  |  |  | DOMAINES TECHNIQUES RECHERCHES (Int. Cl.4) |
|---|---|---|---|
|  |  |  | G 11 C 5/00<br>G 11 C 7/00<br>G 11 C 17/00<br>G 06 F 1/00<br>G 06 K 19/00<br>G 07 F 7/00 |

Le présent rapport a été établi pour toutes les revendications

| Lieu de la recherche | Date d'achèvement de la recherche | Examinateur |
|---|---|---|
| LA HAYE | 07-01-1988 | GEOGHEGAN C.H.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant